# EUROPÄISCHE PATENTSCHRIFT

(11) **EP 1 418 375 B1**
(45) Veröffentlichungstag und Bekanntmachung des Hinweises auf die Patenterteilung: **05.07.2006**
(21) Anmeldenummer: 03022944.7
(22) Anmeldetag: 09.10.2003
(51) Int. Cl.: F16L 11/08, F16L 11/04

(54) **Mehrschichtiger flexibler Schlauch**
Flexible multi-layer hose
Tuyau flexible multicouche

(30) Priorität: 05.11.2002 DE 10251549
(43) Veröffentlichungstag der Anmeldung: 12.05.2004
(73) Patentinhaber: VERITAS AG, 63571 Gelnhausen (DE)
(72) Erfinder: Seyler, Andreas, 63584 Gründau-Lieblos (DE); Rösch, Thomas, 63589 Linsengericht (DE)
(74) Vertreter: Grünecker, Kinkeldey, Stockmair & Schwanhäusser Anwaltssozietät

(56) Entgegenhaltungen:
- EP-A- 0 591 831
- EP-A- 0 657 273
- EP-A- 1 020 673
- EP-A- 1 126 204
- DE-A- 2 403 028
- DE-A- 3 441 879
- DE-C- 4 235 825
- DE-U- 9 108 303
- FR-A- 2 823 550

## Beschreibung

Die vorliegende Erfindung bezieht sich auf einen mehrschichtigen flexiblen Schlauch, vorzugsweise für Kraftstoff oder Kühlmittelleitungen in einem Automobil, mit einer Trägerschicht und einer damit fest verbundenen metallischen Sperrschicht.

Ein derartiger Schlauch ist z. B. aus der EP 1 138 998 A2 bekannt. Derartige Schläuche werden z. B. in einem Automobil für den Transport eines Kühlmittels verwendet. Solche Schläuche weisen eine metallische Sperrschicht und eine Trägerschicht auf. Die metallische Sperrschicht verhindert ein Ausdiffundieren des Kühlmittels aus dem Schlauch. Die Trägerschicht dient der Festigkeit des Schlauches.

Das Dokument EP0591831 offenbart einen Schlauch mit einer Trägerschicht aus einem kautschuk und einer profilierten Sperrschicht aus Metall.

Im Automobilbereich werden hohe Anforderungen an die Flexibilität von derartigen Schläuchen gestellt. Weiterhin soll ein sicherer Schutz gegen das Austreten von Fluiden aus derartigen Schläuchen gewährleistet sein. Derzeitige Schläuche genügen diesen Anforderungen nicht immer.

Aufgabe der Erfindung ist es, einen Schlauch der eingangs genannten Art zu verbessern, insbesondere die Flexibilität und den Schutz vor Austreten von Fluid zu erhöhen.

Die Aufgabe wird erfindungsgemäß gelöst durch die Merkmale des Anspruchs 1.

Diese Lösung hat den Vorteil, dass ein Austreten von Fluid aus dem Schlauch wirksam verhindert werden kann und gleichzeitig eine hohe Flexibilität des Schlauches gewährleistet ist.

Von Vorteil kann es sein, wenn die Trägerschicht aus synthetischem Kautschuk besteht, da dadurch die Festigkeit der Verbindung der Sperrschicht und der Trägerschicht erhöht wird.

Wenn die Sperrschicht vollständig an der Trägerschicht und/oder einer benachbarten Schicht anliegt, kann die Anhaftung der Sperrschicht an der Trägerschicht und/oder einer benachbarten Schicht weiter erhöht werden.

Wenn die Sperrschicht aus Metall besteht, kann die Dichtheit des Schlauches weiter erhöht werden.

Außerdem kann es von Vorteil sein, wenn die Sperrschicht aus Aluminium besteht. Somit kann die Dichtheit des Schlauches weiter erhöht werden.

Zudem kann es sich als vorteilhaft erweisen, wenn die Sperrschicht aus reinem Aluminium 99,5 besteht. Dadurch ist eine noch bessere Anhaftung der Sperrschicht an der Trägerschicht möglich.

In einer vorteilhaften Weiterentwicklung der Erfindung kann eine Verstärkungsschicht vorhanden sein, wodurch eine Beschädigung der Sperrschicht noch besser verhindert werden kann.

Auch kann es sich als vorteilhaft erweisen, wenn die Verstärkungsschicht an die Trägerschicht angrenzt. Dadurch kann die Sperrschicht noch besser geschützt werden.

Vorteilhaft kann es zudem sein, wenn die Verstärkungsschicht aus einem Kunststoffgewebe besteht, da dadurch eine Beschädigung der Sperrschicht noch besser verhindert werden kann.

Vorteilhaft kann es zudem sein, wenn die Verstärkungsschicht aus einem Polyaramid-Gewebe besteht, da dadurch ein noch besserer Schutz der Sperrschicht möglich ist.

Außerdem kann es sich als vorteilhaft erweisen, wenn eine äußere Deckschicht aus einem flexiblen Kunststoff vorhanden ist. Eine derartige Anordnung erhöht die Stabilität des Schlauches weiter.

Wenn die äußere Deckschicht aus synthetischem Kautschuk besteht, ist eine weitere Erhöhung der Festigkeit des Schlauches möglich.

Von Vorteil kann es sein, wenn die Deckschicht an die Verstärkungsschicht angrenzt. Mit einer derartigen Anordnung kann die Festigkeit des Schlauches weiter erhöht werden.

Ebenfalls kann es von Vorteil sein, wenn die Trägerschicht und die Deckschicht eine im wesentlichen gleiche Schichtdicke aufweisen. Auf diese Weise können die Kosten weiter gesenkt werden.

Weiterhin kann es von Vorteil sein, wenn die Trägerschicht eine Schichtdicke zwischen 0,6 mm und 1,5 mm aufweist, da dadurch sowohl eine gute Festigkeit als auch eine genügende Flexibilität erreicht wird.

Es kann sich auch als günstig erweisen, wenn die Deckschicht eine Schichtdicke zwischen 1 mm und 1, 5 mm aufweist. Somit ist es möglich, bei guter Festigkeit eine genügend hohe Flexibilität des Schlauches zu erreichen.

Außerdem kann es von Vorteil sein, wenn die Sperrschicht zwischen einer Innenschicht und der Trägerschicht angeordnet ist. Auf diese Weise kann die Sperrschicht noch besser geschützt werden.

In einer vorteilhaften Weiterentwicklung der Erfindung kann die Innenschicht aus einem polymeren Kunststoff bestehen. Somit ist ein noch besserer Schutz der Sperrschicht möglich.

Wenn die Innenschicht aus einem thermoplastischen Polymer besteht, kann der Schutz der Sperrschicht noch weiter erhöht werden.

Ebenfalls kann es von Vorteil sein, wenn die Schichtdicke der Innenschicht kleiner als die Schichtdicke der Deckschicht ist, da durch ein solches Verhältnis sowohl eine gute Festigkeit als auch eine genügend hohe Flexibilität des Schlauches gewährleistet werden kann.

Es kann sich auch als günstig erweisen, wenn die Schichtdicke der Innenschicht höchstens halb so groß ist wie die Schichtdicke der Deckschicht, da dieses Verhältnis geeignet ist, um einen Schlauch mit guter Festigkeit und genügend hoher Flexibilität herzustellen.

Außerdem kann es von Vorteil sein, wenn die Innenschicht eine Schichtdicke von 0,5 mm aufweist. Auf diese Weise kann die Flexibilität des Schlauches weiter erhöht werden.

Gemäß der Erfindung ist die Sperrschicht profiliert sein. Auf diese Weise ist eine weitere Erhöhung der Flexibilität des Schlauches möglich:

Gemäß der Erfindung befindet sich zwischen der Innenschicht und der Sperrschicht eine Ausgleichsschicht. Somit ist ein noch besserer Halt der Sperrschicht möglich.

Wenn die Ausgleichsschicht ein thermoplastisches Polymer ist, kann der Halt der Sperrschicht noch weiter erhöht werden

Gemäß der Erfindung weist die Ausgleichsschicht eine der Profilierung der Sperrschicht folgenden Amplitude und eine glatte Innenseite auf. Durch eine derartige Anordnung ist die Haftung der Schichten weiter verbessert .

Weiter ist ein Verfahren zur Herstellung eines erfindungsgemäßen mehrschichtigen flexiblen Schlauches beansprucht, in dem die Sperrschicht als gewalzte Folie aufgebracht wird. Ein derartiges Verfahren gewährleistet eine gute Haftung der Sperrschicht. Darüber hinaus können die Kosten erheblich gesenkt werden.

Die Erfindung wird nachstehend anhand von mehreren Ausführungsbeispielen und zugehöriger Zeichnungen näher erläutert.

Diese Zeichnungen zeigen:
- Figur 1:: einen bekannten mehrschichtigen flexiblen Schlauch
- Figur 2:: ein weiteres Beispiel eines Bekannten mehrschichtigen flexiblen Schlauches und
- Figur 3: ein Ausführungsbeispiel des erfindungsgemäßen mehrschichtigen flexiblen Schlauches.

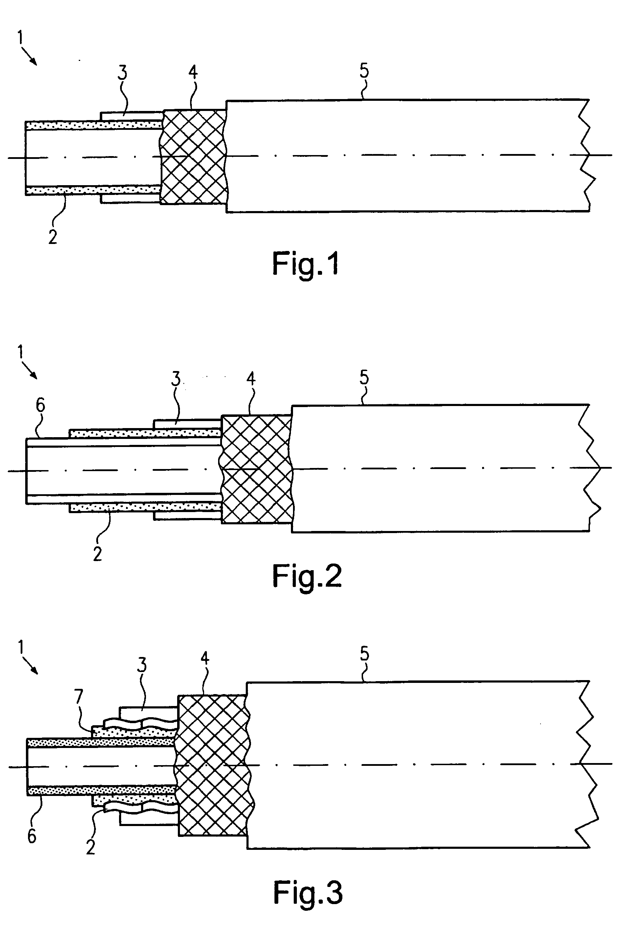

Figur 1 zeigt ein erstes bekannten Ausführungsbeispiel eines erfindungsgemäßen mehrschichtigen flexiblen Schlauches 1. Dieser Schlauch 1 weist eine metallische Sperrschicht 2 auf. Als günstiges Material für die Sperrschicht 2 hat sich Aluminium (AL), insbesondere reines Aluminium 99,5 mit einer Schichtdicke zwischen 0,1 mm und 0,5 mm erwiesen. In dem Bereich von 0,1 mm bis 0,5 mm ist ein guter Schutz hinsichtlich der Dichtheit gegeben. Dieses gilt sowohl für den unkontrollierten Austritt der geförderten Fluide aus dem Inneren des Schlauches 1 als auch für den Eintritt von Medien von außen durch die Wandung hindurch in das Innere des Schlauches 1, wodurch Verunreinigungen des Fluides vermieden werden können. Weiterhin gewährleistet eine im angegebenen Bereich liegende Schichtdicke eine genügend hohe Festigkeit, z. B. beim Verformen des Schlauches.

In dem gezeigten Ausführungsbeispiel ist die Sperrschicht 2 die innerste Schicht des Schlauches 1. Zur Erhöhung der Stabilität der Sperrschicht 2, ist die Sperrschicht 2 auf eine Trägerschicht 3, die aus einem Kautschuk besteht, aufgebracht. Die Sperrschicht 2 liegt vollständig an der Trägerschicht 3 an. Somit wird eine besonders gute Anhaftung der Sperrschicht 2 an der Trägerschicht 3 erreicht. Als günstiges Material für die Trägerschicht 3 hat sich synthetischer Kautschuk erwiesen, wobei die Trägerschicht 3 eine Schichtdicke im Bereich von 0,6 mm bis 1,5 mm aufweist. Bei dem gezeigten Ausführungsbeispiel hat sich eine Schichtdicke im Bereich von 1,5 mm als besonders vorteilhaft erwiesen.

Zur Erhöhung der Stabilität des Schlauches 1, weist der Schlauch 1 weiterhin eine Verstärkungsschicht 4 auf, wobei es besonders vorteilhaft ist, wenn die Verstärkungsschicht 4 an die Trägerschicht 3 angrenzt. Eine gute Verstärkung des Schlauches 1 wird erreicht, wenn die Verstärkungsschicht 4 aus einem Kunststoffgewebe, insbesondere einem Polyaramid-Gewebe besteht.

Zum Schutz vor mechanischen Belastungen ist darüber hinaus eine äußere Deckschicht 5 aus einem flexiblen Kunststoff vorhanden. Dabei hat sich synthetischer Kautschuk als besonders vorteilhaft erwiesen. Dadurch, dass beim gezeigten Beispiel die Deckschicht 5 und die Trägerschicht 3 aus dem gleichen Material, nämlich synthetischem Kautschuk, hergestellt sind und im wesentlichen die gleiche Schichtdicke, hier im Bereich von 1,5 mm aufweisen, ist eine kostengünstige Herstellung des Schlauches 1 möglich. Weiterhin hat sich eine Schichtdicke im Bereich von 1 mm bis 1,5 mm für die Deckschicht 5 sowohl für den Schutz als auch für die Flexibilität des Schlauches 1 als günstig erwiesen. Durch das Angrenzen der Deckschicht 5 an die Verstärkungsschicht 4 ist eine gute Stabilität des Schlauches gewährleistet.

Im Nachfolgenden wird ein zweites Ausführungsbeispiel beschrieben. Um Wiederholungen zu vermeiden, werden nur die Unterschiede zum ersten Ausführungsbeispiel erläutert und gleiche Bauteile mit gleichen Bezugszeichen bezeichnet.

Der in Figur 2 beschriebene bekante Schlauch 1 weist zusätzlich zu dem in Figur 1 dargestellten Ausführungsbeispiel noch eine Innenschicht 6 auf.

Die Sperrschicht 2 ist hier zwischen der Innenschicht 6 und der Trägerschicht 3 angeordnet und liegt vollständig an der Trägerschicht 3 und der Innenschicht 6 an. Auf diese Weise ist die Sperrschicht 2 besser geschützt, wodurch die Haltbarkeit der Sperrschicht 2 weiter erhöht werden kann. Dabei hat es sich als günstig erwiesen, wenn die Innenschicht aus einem polymeren Kunststoff wie z. B. einem thermoplastischen Polymer besteht.

Um die Flexibilität des Schlauches 1 nicht einzuschränken, ist es vorteilhaft, wenn die Schichtdicke der Innenschicht 6 kleiner als die Schichtdicke der Deckschicht 5 ist, insbesondere, wenn die Schichtdicke der Innenschicht 6 höchstens halb so groß ist, wie die Schichtdicke der Deckschicht 5. Als besonders günstig hat sich dabei eine Schichtdicke im Bereich von 0,5 mm für die Innenschicht 6, im Bereich von 0,6 mm für die Trägerschicht 3 und im Bereich von 1,2 mm für die Deckschicht 5 erwiesen.

Im Nachfolgenden wird ein erfinderisches Ausführungsbeispiel beschrieben. Um Wiederholungen zu vermeiden, werden nur die Unterschiede zum ersten und zum zweiten Ausführungsbeispiel erläutert und gleiche Bauteile mit gleichen Bezugszeichen bezeichnet.

Bei dem in Figur 3 gezeigten Ausführungsbeispiel ist die Sperrschicht profiliert, wodurch eine besonders hohe Flexibilität des Schlauches 1 erreicht werden kann.

Um die Haftung der gewellten Sperrschicht 2 zu erhöhen, befindet sich zwischen der Innenschicht 6 und der Sperrschicht 2 eine Ausgleichsschicht 7, die aus einem thermoplastischen Polymer besteht. Als vorteilhaft hat sich dabei FPM und ein Haftvermittler erwiesen. Die Sperrschicht 2 liegt vollständig an der Trägerschicht 2 und der Ausgleichsschicht 7 an.

Dadurch, dass die Ausgleichsschicht 7 eine der Profilierung der Sperrschicht 2 folgende Amplitude und eine glatte Innenseite aufweist, ist eine besonders gute Haftung gewährleistet.

Besonders günstig ist es, wenn die Deckschicht 5 eine Schichtdicke im Bereich von 1 mm aufweist, wodurch eine hohe Stabilität und gleichzeitig eine hohe Flexibilität des Schlauches 1 gewährleistet ist.

Bei einem derartigen Schlauch 1 wird die notwendige Flexibilität für die Sperrschicht 2 aus der Profilierung gewonnen und die mechanische Festigkeit aus den übrigen Schichten. Dadurch können die zulässigen Verformungen des ganzen Verbundes dieses Schlauches für alle Schichten gleichmäßig unterschritten werden.

Weiterhin ist es möglich bei einem gesteigerten Diffusionswiderstand des gesamten Schlauches 1 eine verbesserte Flexibilität sowie ein gutes Verzahnen der gewölbten Sperrschicht 2 mit den übrigen Schichten zu erreichen.

Insbesondere kann durch die Möglichkeit, eine glatte Schicht mit einer profilierten steiferen Schicht zu kombinieren, ein kontinuierlich herstellbarer emissionsoptimierter Schlauch produziert werden, der auf jede beliebige Länge geschnitten und dennoch an nicht dargestellte Verbindungselemente an den Schlauchenden angeschlossen werden kann.

Als besonders haltbar und kostengünstig hat es sich erwiesen, wenn die Sperrschicht 2 durch Umwickeln mit gewalzten Folien aufgebracht ist.

Bei den oben dargestellten Schläuchen bzw. mit dem gezeigten Verfahren ist es gelungen für eine starke Reduktion der Diffusionsverluste geeignete Materialien, die meistens steif sind, in einen Schlauch 1 zu integrieren und trotzdem eine hohe Flexibilität des Schlauches 1 zu gewährleisten. Ein Ablösen der verschiedenen Schichten, z. B. beim Biegen des Schlauches 1 oder durch Vibrationen, kann wirksam verhindert werden. Dadurch, dass die metallische Sperrschicht 2 von mindestens einer anderen Schicht 3 bedeckt ist, werden die mechanischen Belastungen durch die Druckbeaufschlagung und die äußeren mechanischen Bewegungen durch die weichere Schicht 3 aufgenommen.

## Patentansprüche

1. Mehrschichtiger flexibler Schlauch, vorzugsweise für Kraftstoff- oder Kühlmittelleitungen in einem Automobil, mit einer Trägerschicht (3) und einer damit fest verbundenen profilierten metallischen Sperrschicht (2), wobei die Trägerschicht (3) aus einem Kautschuk besteht und die Sperrschicht (2) eine Schichtdicke zwischen 0,1 mm und 0,5 mm aufweist, **dadurch gekennzeichnet, dass** sich zwischen einer Innenschicht (6) und der Sperrschicht (2) eine Ausgleichsschicht (7) befindet, wobei die Ausgleichsschicht (7) eine der Profilierung der Sperrschicht (2) folgende Amplitude und eine glatte Innenseite aufweist.

2. Mehrschichtiger flexibler Schlauch nach Anspruch 1, **dadurch gekennzeichnet, dass** die Trägerschicht (3) aus synthetischem Kautschuk besteht.

3. Mehrschichtiger flexibler Schlauch nach zumindest einem der vorhergehenden Ansprüche, **dadurch gekennzeichnet, dass** die Sperrschicht (2) vollständig an der Trägerschicht (3) und/oder einer benachbarten Schicht (7) anliegt.

4. Mehrschichtiger flexibler Schlauch nach zumindest einem der vorhergehenden Ansprüche, **dadurch gekennzeichnet, dass** die Sperrschicht (2) aus Aluminium besteht.

5. Mehrschichtiger flexibler Schlauch nach zumindest einem der vorhergehenden Ansprüche, **dadurch gekennzeichnet, dass** die Sperrschicht (2) aus reinem Al 99,5 besteht.

6. Mehrschichtiger flexibler Schlauch nach zumindest einem der vorhergehenden Ansprüche, **dadurch gekennzeichnet, dass** eine Verstärkungsschicht (4) vorhanden ist.

7. Mehrschichtiger flexibler Schlauch nach zumindest einem der vorhergehenden Ansprüche, **dadurch gekennzeichnet, dass** die Verstärkungsschicht (4) an die Trägerschicht (3) angrenzt.

8. Mehrschichtiger flexibler Schlauch nach zumindest einem der vorhergehenden Ansprüche, **dadurch gekennzeichnet, dass** die Verstärkungsschicht (4) aus einem Kunststoffgewebe besteht.

9. Mehrschichtiger flexibler Schlauch nach zumindest einem der vorhergehenden Ansprüche, **dadurch gekennzeichnet, dass** die Verstärkungsschicht (4) aus einem Polyaramid-Gewebe besteht.

10. Mehrschichtiger flexibler Schlauch nach zumindest einem der vorhergehenden Ansprüche, **dadurch gekennzeichnet, dass** eine äußere Deckschicht (5) aus einem flexiblen Kunststoff vorhanden ist.

11. Mehrschichtiger flexibler Schlauch nach zumindest einem der vorhergehenden Ansprüche, **dadurch gekennzeichnet, dass** die äußere Deckschicht (5) aus synthetischem Kautschuk besteht.

12. Mehrschichtiger flexibler Schlauch nach zumindest einem der vorhergehenden Ansprüche, **dadurch gekennzeichnet, dass** die Deckschicht (5) an die Verstärkungsschicht (4) angrenzt.

13. Mehrschichtiger flexibler Schlauch nach zumindest einem der vorhergehenden Ansprüche, **dadurch gekennzeichnet, dass** die Trägerschicht (3) und die Deckschicht (5) eine im Wesentlichen gleiche Schichtdicke aufweisen.

14. Mehrschichtiger flexibler Schlauch nach zumindest einem der vorhergehenden Ansprüche, **dadurch gekennzeichnet, dass** die Trägerschicht (3) eine Schichtdicke zwischen 0,6 mm und 1,5 mm aufweist.

15. Mehrschichtiger flexibler Schlauch nach zumindest einem der vorhergehenden Ansprüche, **dadurch gekennzeichnet, dass** die Deckschicht (5) eine Schichtdicke zwischen 1 mm und 1,5 mm aufweist.

16. Mehrschichtiger flexibler Schlauch nach zumindest einem der vorhergehenden Ansprüche, **dadurch gekennzeichnet, dass** die Sperrschicht (2) zwischen der Innenschicht (6) und der Trägerschicht (3) angeordnet ist.

17. Mehrschichtiger flexibler Schlauch nach zumindest einem der vorhergehenden Ansprüche, **dadurch gekennzeichnet, dass** die Innenschicht (6) aus einem polymeren Kunststoff besteht.

18. Mehrschichtiger flexibler Schlauch nach zumindest einem der vorhergehenden Ansprüche, **dadurch gekennzeichnet, dass** die Innenschicht (6) aus Polyamid besteht.

19. Mehrschichtiger flexibler Schlauch nach zumindest einem der vorhergehenden Ansprüche, **dadurch gekennzeichnet, dass** die Schichtdicke der Innenschicht (6) kleiner als die Schichtdicke der Deckschicht (5) ist.

20. Mehrschichtiger flexibler Schlauch nach zumindest einem der vorhergehenden Ansprüche, **dadurch gekennzeichnet, dass** die Schichtdicke der Innenschicht (6) höchstens halb so groß ist wie die Schichtdicke der Deckschicht (5).

21. Mehrschichtiger flexibler Schlauch nach zumindest einem der vorhergehenden Ansprüche, **dadurch gekennzeichnet, dass** die Innenschicht (6) eine Schichtdicke von 0,5 mm aufweist.

22. Mehrschichtiger flexibler Schlauch nach zumindest einem der vorhergehenden Ansprüche, **dadurch gekennzeichnet, dass** die Ausgleichsschicht (7) eine thermoplastische Polymerschicht ist.

23. Verfahren zur Herstellung eines mehrschichtigen flexiblen Schlauches nach den Ansprüchen 1 bis 22, **dadurch gekennzeichnet, dass** die Sperrschicht (2) als gewalzte Folie aufgebracht wird.

## Claims

1. A multilayer flexible hose, preferably for fuel or coolant lines in an automotive vehicle, comprising a support layer (3) and a profiled metallic barrier layer (2) which is fixedly connected to said support layer (3), said support layer (3) being made of rubber (3) and said barrier layer (2) having a layer thickness between 0.1 mm and 0.5 mm, **characterized in that** a compensation layer (7) is provided between an interior layer (6) and the barrier layer (2), said compensation layer (7) having an amplitude following the profile of the barrier layer (2) and a smooth inner side.

2. A multilayer flexible hose according to claim 1, **characterized in that** the support layer (3) is made of synthetic rubber.

3. A multilayer flexible hose according to at least one of the preceding claims, **characterized in that** the barrier layer (2) is in full-area contact with the support layer (3) and/or a neighbouring layer (7).

4. A multilayer flexible hose according to at least one of the preceding claims, **characterized in that** the barrier layer (2) is made of aluminium.

5. A multilayer flexible hose according to at least one of the preceding claims, **characterized in that** the barrier layer (2) is made of pure Al 99.5.

6. A multilayer flexible hose according to at least one of the preceding claims, **characterized in that** a reinforcement layer (4) is provided.

7. A multilayer flexible hose according to at least one of the preceding claims, **characterized in that** the reinforcement layer (4) borders on the support layer (3).

8. A multilayer flexible hose according to at least one of the preceding claims, **characterized in that** the reinforcement layer (4) is made of a synthetic fabric.

9. A multilayer flexible hose according to at least one of the preceding claims, **characterized in that** the reinforcement layer (4) is made of a polyaramid fabric.

10. A multilayer flexible hose according to at least one of the preceding claims, **characterized in that** an outer cover layer (5) made of a flexible synthetic material is provided.

11. A multilayer flexible hose according to at least one of the preceding claims, **characterized in that** the outer cover layer (5) is made of synthetic rubber.

12. A multilayer flexible hose according to at least one of the preceding claims, **characterized in that** the cover layer (5) borders on the reinforcement layer (4).

13. A multilayer flexible hose according to at least one of the preceding claims, **characterized in that** the support layer (3) and the cover layer (5) have essentially the same layer thickness.

14. A multilayer flexible hose according to at least one of the preceding claims, **characterized in that** the support layer (3) has a layer thickness between 0.6 mm and 1.5 mm.

15. A multilayer flexible hose according to at least one of the preceding claims, **characterized in that** the cover layer (5) has a layer thickness between 1 mm and 1.5 mm.

16. A multilayer flexible hose according to at least one of the preceding claims, **characterized in that** the barrier layer (2) is arranged between the interior layer (6) and the support layer (3).

17. A multilayer flexible hose according to at least one of the preceding claims, **characterized in that** the interior layer (6) is made of a polymeric synthetic material.

18. A multilayer flexible hose according to at least one of the preceding claims, **characterized in that** the interior layer (6) is made of polyamide.

19. A multilayer flexible hose according to at least one of the preceding claims, **characterized in that** the layer thickness of the interior layer (6) is smaller than the layer thickness of the cover layer (5).

20. A multilayer flexible hose according to at least one of the preceding claims, **characterized in that** the interior layer (6) has a layer thickness which is, at most, half the layer thickness of the cover layer (5).

21. A multilayer flexible hose according to at least one of the preceding claims, **characterized in that** the interior layer (6) has a layer thickness of 0.5 mm.

22. A multilayer flexible hose according to at least one of the preceding claims, **characterized in that** the compensation layer (7) is a thermoplastic polymer layer.

23. A method of producing a multilayer flexible hose according to claims 1 to 22, **characterized in that** the barrier layer (2) is applied in the form of a rolled foil.

## Revendications

1. Tuyau flexible multicouche, de préférence pour conduites de carburant ou de liquide de refroidissement dans une automobile, avec une couche de support (3) et une couche barrière (2) métallique profilée solidement fixée à celle-ci, la couche de support (3) étant composée de caoutchouc et la couche barrière (2) présentant une épaisseur comprise entre 0,1 mm et 0,5 mm, **caractérisé en ce qu'**une couche intermédiaire (7) se trouve entre une couche intérieure (6) et la couche barrière (2), la couche intermédiaire (7) présentant une amplitude suivant le profil de la couche barrière (2) et un côté intérieur lisse.

2. Tuyau flexible multicouche selon la revendication 1, **caractérisé en ce que** la couche de support (3) est composée de caoutchouc synthétique.

3. Tuyau flexible multicouche selon l'une au moins des revendications précédentes, **caractérisé en ce que** la couche barrière (2) est collée entièrement à la couche de support (3) et/ou à une couche adjacente (7).

4. Tuyau flexible multicouche selon l'une au moins des revendications précédentes, **caractérisé en ce que** la couche barrière (2) est composée d'aluminium.

5. Tuyau flexible multicouche selon l'une au moins des revendications précédentes, **caractérisé en ce que** la couche barrière (2) est composée d'aluminium pur à 99,5 %.

6. Tuyau flexible multicouche selon l'une au moins des revendications précédentes, **caractérisé en ce qu'**il est prévu une couche de renforcement (4).

7. Tuyau flexible multicouche selon l'une au moins des revendications précédentes, **caractérisé en ce que** la couche de renforcement (4) est adjacente à la couche de support (3) .

8. Tuyau flexible multicouche selon l'une au moins des revendications précédentes, **caractérisé en ce que** la couche de renforcement (4) est composée d'un tissu synthétique.

9. Tuyau flexible multicouche selon l'une au moins des revendications précédentes, **caractérisé en ce que** la couche de renforcement (4) est composée d'un tissu en polyaramide.

10. Tuyau flexible multicouche selon l'une au moins des revendications précédentes, **caractérisé en ce qu'**il est prévu une couche de protection extérieure (5) en matière plastique flexible.

11. Tuyau flexible multicouche selon l'une au moins des revendications précédentes, **caractérisé en ce que** la couche de protection extérieure (5) est composée de caoutchouc synthétique.

12. Tuyau flexible multicouche selon l'une au moins des revendications précédentes, **caractérisé en ce que** la couche de protection (5) est adjacente à la couche de renforcement (4).

13. Tuyau flexible multicouche selon l'une au moins des revendications précédentes, **caractérisé en ce que** la couche de support (3) et la couche de protection (5) présentent une épaisseur de couche sensiblement identique.

14. Tuyau flexible multicouche selon l'une au moins des revendications précédentes, **caractérisé en ce que** la couche de support (3) présente une épaisseur comprise entre 0,6 mm et 1,5 mm.

15. Tuyau flexible multicouche selon l'une au moins des revendications précédentes, **caractérisé en ce que** la couche de protection (5) présente une épaisseur comprise entre 1 mm et 1,5 mm.

16. Tuyau flexible multicouche selon l'une au moins des revendications précédentes, **caractérisé en ce que** la couche barrière (2) est disposée entre la couche intérieure (6) et la couche de support (3).

17. Tuyau flexible multicouche selon l'une au moins des revendications précédentes, **caractérisé en ce que** la couche intérieure (6) est composée de plastique polymère.

18. Tuyau flexible multicouche selon l'une au moins des revendications précédentes, **caractérisé en ce que** la couche intérieure (6) est composée de polyamide.

19. Tuyau flexible multicouche selon l'une au moins des revendications précédentes, **caractérisé en ce que** l'épaisseur de la couche intérieure (6) est inférieure à l'épaisseur de la couche de protection (5).

20. Tuyau flexible multicouche selon l'une au moins des revendications précédentes, **caractérisé en ce que** l'épaisseur de la couche intérieure (6) représente au maximum la moitié de l'épaisseur de la couche de protection (5) .

21. Tuyau flexible multicouche selon l'une au moins des revendications précédentes, **caractérisé en ce que** la couche intérieure (6) présente une épaisseur de 0,5 mm.

22. Tuyau flexible multicouche selon l'une au moins des revendications précédentes, **caractérisé en ce que** la couche intermédiaire (7) est une couche polymère thermoplastique.

23. Procédé de fabrication d'un tuyau flexible multicouche selon les revendications 1 à 22, **caractérisé en ce que** la couche barrière (2) est appliquée sous la forme d'un film laminé.
